# EUROPEAN PATENT APPLICATION

(11) **EP 4 199 468 A1**
(43) Date of publication of application: **21.06.2023**
(21) Application number: 21863479.8
(22) Date of filing: 11.08.2021
(51) Int. Cl.: H04L 45/74

(54) **METHOD FOR GENERATING TABLE ITEM, METHOD FOR SENDING MESSAGE, DEVICE, AND SYSTEM**

(30) Priority: 03.09.2020 CN 202010915686
(71) Applicant: Huawei Technologies Co., Ltd., Shenzhen, Guangdong 518129 (CN)
(72) Inventor: WANG, Haibo, Shenzhen, Guangdong 518129 (CN); ZHUANG, Shunwan, Shenzhen, Guangdong 518129 (CN); YAN, Gang, Shenzhen, Guangdong 518129 (CN)
(74) Representative: Gill Jennings & Every LLP
(86) International application number: PCT/CN2021/111947
(87) International publication number: WO 2022/048412

(57) **Abstract**

This application discloses an entry generation method, a packet sending method, a device, and a system, to resolve a problem that a high requirement on a processing capability of a network device is imposed in a conventional technology, which brings high pressure to an operator. The packet sending method provided in this application includes: A first network device receives a first packet, where a destination address of the first packet includes a first identifier, the first network device and a destination device of the first packet belong to a same AS, and the first identifier includes one or more of the following: an area identifier corresponding to the destination device or an access device identifier corresponding to the destination device. The first network device determines a first egress based on the first identifier, and sends the first packet via the first egress.

## Description

This application claims priority to Chinese Patent Application No. 202010915686.2, filed with the China National Intellectual Property Administration on September 3, 2020 and entitled "ENTRY GENERATION METHOD, PACKET SENDING METHOD, DEVICE, AND SYSTEM", which is incorporated herein by reference in its entirety.

### TECHNICAL FIELD

This application relates to the communication field, and in particular, to an entry generation method, a packet sending method, a device, and a system.

### BACKGROUND

The border gateway protocol (Border Gateway Protocol, BGP) is a widely used network protocol. A BGP network architecture may include a plurality of network devices. The plurality of network devices may be divided into one or more autonomous system (autonomous system, AS) routing systems. In the AS routing system, a network device connected to a terminal device needs to send an advertisement packet including an internet protocol (Internet Protocol, IP) address of the terminal device to another network device in the AS routing system, so that the another network device generates a corresponding forwarding entry based on the IP address of the terminal device. The forwarding entry is used to forward a packet to the terminal device. Certainly, a device connected to the network device may be not only the terminal device, but also a server or the like.

As a quantity of devices such as terminal devices or servers connected to the network device increases greatly, a quantity of forwarding entries that need to be generated by the network device also increases greatly. This imposes a high requirement on a processing capability of the network device, and also brings high maintenance pressure to a network operator corresponding to the network device.

### SUMMARY

Embodiments of this application provide a packet sending method, an entry generation method, a device, and a system, so as to reduce a requirement on a processing capability of a network device, to reduce maintenance pressure of an operator.

According to a first aspect, an embodiment of this application provides a packet sending method. The method may be applied to a first network device such as a router or a switch, and the first network device is located in an autonomous system (autonomous system, AS) routing system. The method includes the following steps. First, the first network device receives a first packet. A destination address of the first packet may include a first identifier, which indicates a location of a destination device of the first packet in a network. The destination device of the first packet and the first network device belong to a same AS. After obtaining the first packet, the first network device may determine a first egress based on the first identifier, and send the first packet via the first egress, so as to send the first packet to an area corresponding to the destination device or an access device corresponding to the destination device. In this way, the first network device can forward the first packet based on the first identifier without using an IP address of the destination device. Correspondingly, a forwarding entry of the first network device may record only a correspondence between the first identifier and a network interface. When the first network device and the destination device of the first packet belong to different areas in the same AS, the first identifier includes an area identifier corresponding to the destination device, and a quantity of forwarding entries of the first network device is close to a quantity of area identifiers in the AS. When the first network device and the destination device of the first packet belong to a same area in the same AS, the first identifier includes an access device identifier corresponding to the destination device, and a quantity of forwarding entries of the first network device is close to a quantity of area identifiers in the AS. In this way, the quantity of forwarding entries of the first network device is close to a sum of a quantity of areas in the AS and a quantity of access devices in the area, and does not exceed a quantity of access devices in the AS. An amount of information recorded in the forwarding entry of the first network device is greatly reduced compared with that in a conventional technology, so that a requirement on a processing capability of the first network device is reduced, and a maintenance pressure on a network operator is reduced. In addition, because a plurality of network devices in a same area correspond to a same area identifier, only a small part of network devices in each area may send an advertisement packet to the outside, so that a requirement on a processing capability of a network device is further reduced.

Optionally, before forwarding the first packet, the first network device may determine the first egress based on the forwarding entry. The forwarding entry may include a correspondence between the first identifier and an identifier of the first egress. The first egress is a physical interface or a virtual interface of the first network device, and the first network device is connected to another device via the first egress. In this way, by searching the forwarding entry, the first network device may determine the identifier of the first egress corresponding to the first identifier, so as to send, via the first egress, the first packet to the destination device of the first packet, to implement normal packet transmission.

Optionally, when the first identifier includes the area identifier corresponding to the destination device and the access device identifier corresponding to the destination device, the first network device may determine the first egress based on the access device identifier corresponding to the destination device. The first network device may first search a forwarding entry including a correspondence between the access device identifier and the identifier of the first egress, and search the forwarding entry for an identifier of a first egress corresponding to an access device identifier corresponding to a source device, so as to send, via the first egress, the first packet to the destination device of the first packet, to implement normal packet transmission.

Optionally, when the first identifier includes the area identifier corresponding to the destination device, and the area identifier of the first network device or an area identifier of a next-hop (nexthop) device of the first network device is the same as the area identifier corresponding to the destination device, it indicates that the first packet is to be forwarded to an area in which the destination device is located, or has been forwarded to the area in which the destination device is located. In this case, the first network device may first remove an area identifier corresponding to the source device from the first identifier of the first packet, and then send the first packet, to reduce a length of the first packet.

Optionally, when the first identifier includes the access device identifier corresponding to the destination device, and an identifier of the first network device or an identifier of a next-hop (next-hop) device of the first network device is the same as the access device identifier corresponding to the destination device, it indicates that the first packet is to be forwarded to the access device of the destination device, or has been forwarded to the access device of the destination device. In this case, the first network device may first remove an old device identifier corresponding to the source device from the first identifier of the first packet, and then send the first packet, to reduce a length of the first packet.

Optionally, the first network device may further receive, via the first egress, an advertisement packet including the first identifier, where the first identifier may include the area identifier corresponding to the destination device and/or the access device identifier corresponding to the destination device. The first network device may generate the forwarding entry based on the first identifier and the identifier of the first egress. In this way, a quantity of generated forwarding entries is close to a quantity of first identifiers. Because different downstream devices may correspond to a same first identifier, the quantity of forwarding entries is less than a quantity of downstream devices. An amount of information recorded in the forwarding entry of the first network device is greatly reduced compared with that in a conventional technology, so that a requirement on a processing capability of the first network device is reduced, and a maintenance pressure on a network operator is reduced.

Optionally, the advertisement packet received by the first network device may include a route prefix address, and the first identifier is carried in the route prefix address.

Optionally, the advertisement packet received by the first network device may be a border gateway protocol (Border Gateway Protocol, BGP) update message.

Optionally, the first identifier may further include an autonomous system AS identifier corresponding to the destination device. The AS identifier corresponding to the destination device indicates an AS in which the destination device is located, and is the same as an AS identifier corresponding to the first network device.

Optionally, the first packet may include an internet protocol version 6 (Internet Protocol version 6, IPv6) address, the IPv6 address may include indication information and the first identifier, and the indication information indicates that the IPv6 address further includes the first identifier. In this way, after obtaining the IPv6 address, the first network device may determine, based on the indication information, that the IPv6 address further includes the first identifier, so as to determine the first identifier based on the IPv6 address and send the first packet based on the first identifier.

According to a second aspect, an embodiment of this application further provides an entry generation method. The method may be applied to a first network device such as a router or a switch, and the first network device belongs to an AS routing system. The method includes the following steps. First, the first network device receives an advertisement packet. The first network device may receive the advertisement packet via a first egress, where the advertisement packet may include a first identifier corresponding to a source device, and the first identifier corresponding to the source device may include an area identifier corresponding to the source device and/or an access device identifier corresponding to the source device. After receiving the advertisement packet, the first network device may generate a forwarding entry based on the first identifier. The forwarding entry may include the first identifier and an identifier of the first egress. In this way, a quantity of forwarding entries of the first network device is close to a sum of a quantity of areas in the AS and a quantity of access devices in the area, and does not exceed a quantity of access devices in the AS. In one AS, a plurality of areas may be included, each area may include a plurality of network devices and access devices, and each access device may correspond to a plurality of downstream devices. Therefore, the quantity of forwarding entries is far less than a sum of the quantity of access devices and a quantity of downstream devices. An amount of information recorded in the forwarding entry of the first network device is greatly reduced compared with that in a conventional technology, so that a requirement on a processing capability of the first network device is reduced, and a maintenance pressure on a network operator is reduced.

Optionally, the advertisement packet received by the first network device may include a route prefix address, and the route prefix address is used to carry the first identifier corresponding to the source device.

Optionally, the advertisement packet received by the first network device may be a BGP update message.

Optionally, the first identifier may further include an autonomous system AS identifier corresponding to the destination device. The AS identifier corresponding to the destination device indicates an AS in which the destination device is located, and is the same as an AS identifier corresponding to the first network device.

According to a third aspect, an embodiment of this application further provides a packet sending method. The method may be applied to a second network device, and the second network device and a first network device belong to a same AS routing system. The method includes the following steps. First, the second network device generates an advertisement packet, where the advertisement packet may include a first identifier corresponding to a source device, and the first identifier corresponding to the source device may include an area identifier corresponding to the source device and/or an access device identifier corresponding to the source device. After generating the advertisement packet, the second network device may send the advertisement packet to the first network device in the same AS, so that the first network device generates a forwarding entry based on the advertisement packet.

According to a fourth aspect, an embodiment of this application provides a packet sending apparatus. The apparatus is applied to a first network device, and the first network device is located in an autonomous system AS routing system. The apparatus includes: a receiving unit, configured to receive a first packet, where a destination address of the first packet includes a first identifier, the first network device and a destination device of the first packet belong to a same AS, and the first identifier includes one or more of the following: an area identifier corresponding to the destination device and an access device identifier corresponding to the destination device; a processing unit, configured to determine a first egress based on the first identifier; and a sending unit, configured to send the first packet via the first egress.

Optionally, the processing unit is configured to determine the first egress based on a forwarding entry, where the forwarding entry includes the first identifier and an identifier of the first egress.

Optionally, the first identifier includes the area identifier and the access device identifier. The processing unit is configured to: determine the first egress based on the forwarding entry, and send the first packet via the first egress, where the forwarding entry includes the access device identifier and the identifier of the first egress.

Optionally, the first identifier includes the area identifier. The processing unit is configured to remove the area identifier from the first packet.

Optionally, the first identifier includes the access device identifier. The processing unit is configured to remove the access device identifier from the first packet.

Optionally, the processing unit is further configured to: receive an advertisement packet, and generate the forwarding entry based on the first identifier and the identifier of the first egress. The advertisement packet includes the first identifier. The first network device receives the advertisement packet via the first egress.

Optionally, the advertisement packet includes a route prefix address, and the route prefix address includes the first identifier.

Optionally, the advertisement packet is a border gateway protocol BGP update message.

Optionally, the first identifier further includes an autonomous system AS identifier corresponding to the destination device, and the AS identifier corresponding to the destination device is the same as an AS identifier corresponding to the first network device.

Optionally, the first packet includes an internet protocol version 6 IPv6 address, the IPv6 address includes indication information and the first identifier, and the indication information indicates that the IPv6 address further includes the first identifier.

According to a fifth aspect, an embodiment of this application provides an entry generation apparatus. The apparatus is applied to a first network device, and the first network device is located in an autonomous system AS routing system. The apparatus includes: a receiving unit, configured to receive an advertisement packet, where the advertisement packet includes a first identifier corresponding to a source device, the first network device and the source device belong to a same AS, and the first identifier includes one or more of the following: an area identifier corresponding to the source device and an access device identifier corresponding to the source device; and a processing unit, configured to generate a forwarding entry based on the first identifier. The forwarding entry includes the first identifier and an identifier of a first egress. The first network device receives the advertisement packet via the first egress.

Optionally, the advertisement packet includes a route prefix address, and the route prefix address includes the first identifier corresponding to the source device.

Optionally, the advertisement packet is a border gateway protocol BGP update message.

Optionally, the first identifier may further include an autonomous system AS identifier corresponding to the source device.

According to a sixth aspect, an embodiment of this application provides a packet sending apparatus. The apparatus is applied to a second network device, the second network device is located in an autonomous system AS routing system, and the AS routing system includes a first network device and the second network device. The apparatus includes: a generating unit, configured to generate an advertisement packet, where the advertisement packet includes a first identifier corresponding to a source device, and the first identifier includes one or more of the following: an area identifier corresponding to the source device and an access device identifier corresponding to the source device; and a sending unit, configured to send the advertisement packet to the first network device. The first network device, the second network device, and the source device belong to a same AS.

According to a seventh aspect, an embodiment of this application provides a network system, including a first network device. The first network device may be used in the method according to either of the first aspect and the second aspect.

Optionally, the network system further includes a second network device, and the second network device is configured to perform the method according to the third aspect.

According to an eighth aspect, an embodiment of this application further provides a network device. The network device includes at least one processor, where the at least one processor is coupled to at least one memory, and the at least one processor is configured to execute a computer program or instructions stored in the at least one memory, to enable the network device to perform the packet sending method according to the first aspect.

According to a ninth aspect, an embodiment of this application further provides a network device. The network device includes at least one processor, where the at least one processor is coupled to at least one memory, and the at least one processor is configured to execute a computer program or instructions stored in the at least one memory, to enable a first network device to perform the entry generation method according to the second aspect.

According to a tenth aspect, an embodiment of this application further provides a network device. The network device includes at least one processor, where the at least one processor is coupled to at least one memory, and the at least one processor is configured to execute a computer program or instructions stored in the at least one memory, to enable a first device to perform the packet sending method according to the third aspect.

According to an eleventh aspect, an embodiment of this application provides a computer-readable storage medium, including a computer program. When the computer program is run on a computer, the computer is enabled to perform the method according to any one of the first aspect, the second aspect, or the third aspect.

According to a twelfth aspect, an embodiment of this application provides a chip, including a processor and an interface circuit. The interface circuit is configured to receive instructions and transmit the instructions to the processor. The processor is configured to perform the method according to any one of the first aspect, the second aspect, or the third aspect.

### BRIEF DESCRIPTION OF DRAWINGS

FIG. 1 is a schematic diagram of a structure of a BGP network architecture according to an embodiment of this application;
FIG. 2 is a schematic diagram of interaction of an entry generation method and a packet sending method according to an embodiment of this application;
FIG. 3 is a schematic diagram of a possible format of an NLRI field according to an embodiment of this application;
FIG. 4 is a schematic diagram of a structure of an entry generation apparatus 400 according to an embodiment of this application;
FIG. 5 is a schematic diagram of a structure of a packet sending apparatus 500 according to an embodiment of this application;
FIG. 6 is a schematic diagram of a structure of a packet sending apparatus 600 according to an embodiment of this application;
FIG. 7 is a schematic diagram of a structure of a network device 700 according to an embodiment of this application;
FIG. 8 is a schematic diagram of a structure of a network device 800 according to an embodiment of this application;
FIG. 9 is a schematic diagram of a structure of a network device 900 according to an embodiment of this application; and
FIG. 10 is a schematic diagram of a structure of a network device 1000 according to an embodiment of this application.

### DESCRIPTION OF EMBODIMENTS

In Internet, a plurality of autonomous systems (autonomous system, AS) may exist, and one AS may include a plurality of network devices. In one AS, one network device may be connected to one or more other network devices, to implement packet transmission in the AS. In a packet transmission process, the network device may determine, based on a forwarding entry, a network interface corresponding to a destination IP address of a packet, and forward, through the network interface, the packet to a destination device corresponding to the destination IP address.

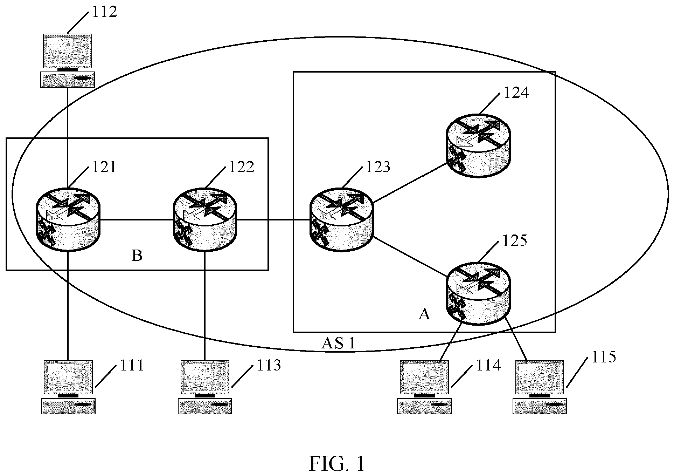

FIG. 1 is a schematic diagram of a structure of a BGP network architecture. The BGP network may include a device 111, a device 112, a device 113, a device 114, a device 115, a network device 121, a network device 122, a network device 123, a network device 124, and a network device 125. The network device 121, the network device 122, the network device 123, the network device 124, and the network device 125 belong to a same AS. The network device 121 is connected to the network device 122, and the network device 123 is separately connected to network device 122, the network device 124, and the network device 125. The device 111 and the device 112 are separately connected to the network device 121, the device 113 is connected to the network device 122, and the device 114 and the device 115 are separately connected to the network device 125.

In a conventional technology, to implement packet forwarding, the network device 121 may publish an advertisement packet 1 and an advertisement packet 2 to the network device 122. The advertisement packet 1 may include an IP address of the device 111, and is used to advertise the IP address of the device 111 to the network device 122. The advertisement packet 2 may include an IP address of the device 112, and is used to advertise the IP address of the device 112 to the network device 122. The network device 125 may publish an advertisement packet 3 and an advertisement packet 4 to the network device 122 via the network device 123. The advertisement packet 3 may include an IP address of the device 114, and is used to advertise the IP address of the device 114 to the network device 122. The advertisement packet 4 may include an IP address of the device 115, and is used to advertise the IP address of the device 115 to the network device 122. The network device 122 may generate four corresponding forwarding entries based on the received advertisement packet 1, advertisement packet 2, advertisement packet 3, and advertisement packet 4, to record a correspondence between an IP address of a device and a network interface, so as to perform packet forwarding.

It is assumed that the network device 122 is connected to the network device 121 through a network interface X, and is connected to the network device 123 through a network interface Y. An IP address of the device 111 is 192.1.1.1, an IP address of the device 112 is 192.1.1.2, an IP address of the device 114 is 192.1.1.4, and an IP address of the device 115 is 192.1.1.5. In this case, the forwarding entries generated by the network device 122 may be as shown in Table 1.

**Table 1**

| Destination address | Network interface |
|---|---|
| 192.1.1.1 | X |
| 192.1.1.2 | X |
| 192.1.1.4 | Y |
| 192.1.1.5 | Y |

The first row of the forwarding entry shown in Table 1 is used as an example. It indicates that when the network device 122 receives a packet whose destination address is 192.1.1.1, the network device 122 may send the packet through the network interface Y, so that the device 111 whose IP address is 192.1.1.1 receives the packet.

It may be learned that, to implement packet transmission in an AS, the network device needs to generate and store a forwarding entry corresponding to an IP address of a device that communicates with the network device. With the expansion of an internet scale, one AS needs to be connected to more and more devices, and consequently, a network device needs to generate a large quantity of forwarding entries. This imposes a high requirement on a processing capability of the network device, and also brings great maintenance pressure to an internet operator.

To resolve the foregoing problem, embodiments of this application provide an entry generation method and a packet sending method. The method is applied to an AS routing system, to reduce a quantity of forwarding entries of a network device in the AS routing system, so that a requirement on the processing capability of the network device is reduced, and the maintenance pressure of the internet operator is reduced.

The following briefly describes terms in this application.

An autonomous system (autonomous system, AS) routing system is a communication system that allocates and generates an IP address based on an AS identifier and related information, performs route advertisement and packet forwarding between ASs based on the AS identifier, and performs packet forwarding in the AS based on the related information. The related information herein may include but is not limited to one or more of the following: area information in the AS, access device information in the AS, and source device information in the AS.

The method provided in embodiments of this application may be applied to the network architecture shown in FIG. 1.

In this embodiment of this application, the device 111, the device 112, the device 113, the device 114, and the device 115 may be terminal devices or servers. The terminal device may also be referred to as user equipment (user equipment, UE), a mobile station (mobile station, MS), a mobile terminal (mobile terminal, MT), a terminal, or the like, and is a device that provides voice and/or data connectivity for a user, or a chip disposed in the device, for example, a handheld device or a vehicle-mounted device having a wireless connection function. Currently, some examples of the terminal device are a mobile phone, a desktop computer, a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a 5G-residential gateway (5G-residential gateway, 5G-RG) device, and the like.

The network device 121, the network device 122, the network device 123, the network device 124, and the network device 125 may be physical devices that support a routing function, for example, a router (router) or a switch (switch), or may be a server on which a virtual router or a virtual switch is deployed, and are configured to transmit a packet between the device 111, the device 112, the device 113, the device 114, and the device 115 or another packet.

In this embodiment of this application, a device identifier of the network device 121 is router 1, a device identifier of the network device 122 is router 2, a device identifier of the network device 123 is router 3, a device identifier of the network device 124 is router 4, and a device identifier of the network device 125 is router 5.

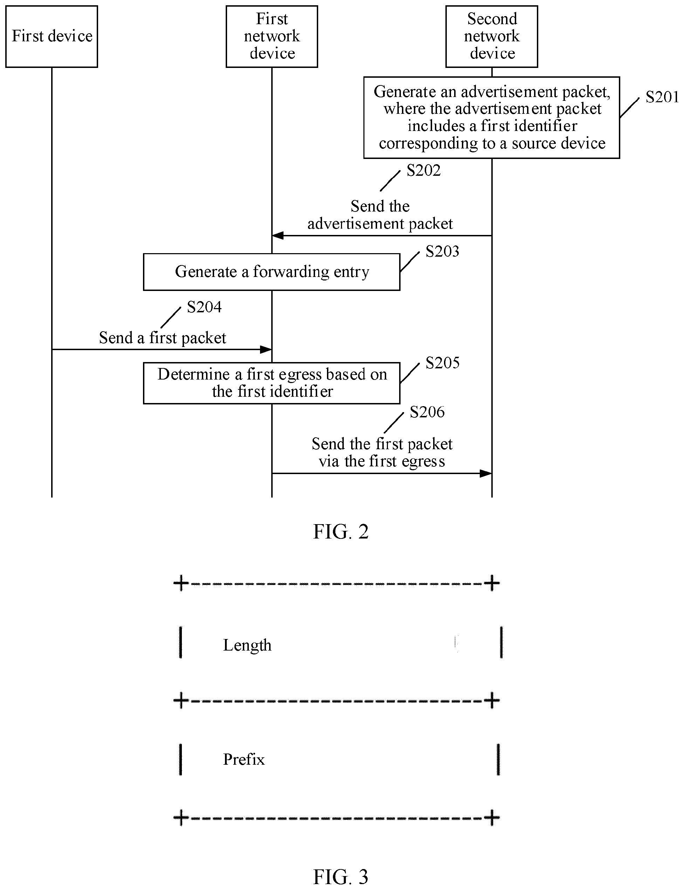

FIG. 2 is a schematic diagram of interaction of an entry generation method and a packet sending method according to an embodiment of this application. The entry generation method provided in this embodiment of this application includes the following steps.

S201: A second network device generates an advertisement packet, where the advertisement packet includes a first identifier corresponding to a source device.

In this embodiment of this application, the second network device may be any one of the network device 121, the network device 122, the network device 123, the network device 124, and the network device 125 in FIG. 1.

In this embodiment of this application, the advertisement packet generated by the second network device includes the first identifier corresponding to the source device, and is used to advertise a location of the source device in a network to another network device. The source device is a downstream device that communicates with the second network device. For example, if the second network device is the network device 121, the source device may be the device 111 or the device 112; if the second network device is the network device 125, the source device may be the device 114 or the device 115. In this embodiment of this application, because the source device is the downstream device of the second network device, it may be considered that an AS corresponding to the source device is the same as an AS to which the second network device belongs. In other words, an AS identifier of the second network device is the same as an AS identifier corresponding to the source device.

In this embodiment of this application, information included in the first identifier corresponding to the source device is different when objects advertised by the advertisement packet are different. In this embodiment of this application, the first identifier corresponding to the source device may include any one or more of an area identifier corresponding to the source device and an access device identifier corresponding to the source device.

The area identifier is an identifier of an area divided in the AS. One AS may include a plurality of network devices, and a network device in the AS may correspond to a plurality of terminal devices or servers. Consequently, a same AS may include a massive quantity of devices. To facilitate device management, one AS may be divided into a plurality of areas, and each area may include one or more network devices. To distinguish between areas, each area may correspond to one area identifier, and is used to uniquely identify the area. FIG. 1 is used as an example. The network device 123, the network device 124, and the network device 125 may be divided into one area whose area identifier is an area A; and the network device 121 and the network device 122 are divided into another area whose area identifier is an area B. The "area" mentioned in embodiments of this application may be an administrative region such as a country, a province, a city, a district, or a county, or may be a non-administrative region such as a cell, a street, or a room.

The following describes the following three cases of the first identifier with reference to the objects advertised by the advertisement packet.

Case 1: The first identifier includes the area identifier corresponding to the source device, and does not include the access device identifier corresponding to the source device.

Because the source device is the downstream device of the second network device, it may be considered that an area corresponding to the source device is the same as an area to which the second network device belongs. In other words, the area identifier corresponding to the source device is the same as an area identifier corresponding to the second network device. If the advertised object is a cross-area network device, when generating the advertisement packet, the second network device may include the area identifier (that is, the area identifier corresponding to the source device) of an area in which the second network device is located as the first identifier in the advertisement packet. In this way, when receiving the advertisement packet, a network device in another area may determine, based on the first identifier, the area in which the source device is located.

FIG. 1 is still used as an example. It is assumed that the second network device is the network device 125, and the source device is the downstream device 114 of the network device 125. The network device 125 may generate an advertisement packet, where the advertisement packet may include the first identifier, and the first identifier may include an area identifier area A corresponding to the device 114. Certainly, a network device that generates the advertisement packet including the area A may alternatively be the network device 123 or the network device 124, and an advertised object of the advertisement packet may be a network device in the area B.

In some possible implementations, one AS may be divided into a plurality of areas, each area may be further divided into a plurality of subareas, and each subarea may include one or more network devices. In this case, in embodiments of this application, in addition to the area identifier corresponding to the source device, the first identifier may further include a subarea identifier corresponding to the source device.

FIG. 1 is still used as an example. It is assumed that the network device 123 and the network device 124 belong to a subarea A1, and the network device 125 belongs to a subarea A2. In this case, the device 114 used as the source device also belongs to the subarea A2. Correspondingly, in addition to the area identifier area A, the advertisement packet generated by the network device 125 may include a subarea identifier A2 corresponding to the device 114.

Case 2: The first identifier includes the access device identifier corresponding to the source device, and does not include the area identifier corresponding to the source device.

It can be learned from the foregoing descriptions that the area identifier corresponding to the source device is the same as the area identifier corresponding to the second network device. In this case, if the advertised object is a network device that belongs to the same area as the second network device, that is, an area identifier of the advertised object is the same as the area identifier corresponding to the source device, when the second network device generates an advertisement packet, the second network device may include the access device identifier corresponding to the source device as the first identifier in the advertisement packet. In this way, when receiving the advertisement packet, a network device in this area may determine, based on the first identifier, an access device corresponding to the source device.

FIG. 1 is still used as an example. It is assumed that the second network device is the network device 125, the source device is the downstream device 114 of the network device 125, and the advertised object of the advertisement packet is the network device 123. Because both the network device 123 and the network device 125 belong to the area A, the first identifier in an advertisement packet generated by the network device 125 may include an access device identifier router 5 corresponding to the device 114.

In addition, in some possible implementations, area division is not performed in the AS. In this case, to advertise a location of the source device in the AS to another network device in the AS, the first identifier may include the access device identifier corresponding to the source device, and does not include the area identifier corresponding to the source device. The access device identifier corresponding to the source device may be an identifier of an access device of the source device. The access device of the source device may be a network device directly connected to the source device, for example, the second network device. In this case, the access device identifier corresponding to the source device may be an identifier of the second network device. Because the source device accesses the network by using the access device, a location of the access device in the network may be determined based on the identifier of the access device corresponding to the source device, so as to determine the location of the source device in the network.

FIG. 1 is still used as an example. It is assumed that the second network device is the network device 125, the source device is the downstream device 114 of the network device 125, and the device 114 accesses the network via the network device 125. An access device corresponding to the device 114 is the network device 125, and the access device identifier corresponding to the device 114 may be the device identifier router 5 of the network device 125. In this case, in the advertisement packet generated by the network device 125, the first identifier may include the access device identifier router 5 corresponding to the device 125.

Case 3: The first identifier includes the area identifier corresponding to the source device and the access device identifier corresponding to the source device.

The foregoing describes two cases in which the advertised objects of the advertisement packet are network devices in a same area and the advertised objects of the advertisement packet are network devices in different areas. In this embodiment of this application, if advertised objects of the advertisement packet include both network devices in a same area and network devices in different areas, that is, the second network device needs to advertise the location of the source device in the network to the network devices in a same area and the network devices in different areas, the first identifier may include both the area identifier corresponding to the source device and the access device identifier corresponding to the source device.

FIG. 1 is still used as an example. It is assumed that the second network device is the network device 125, and the source device is the downstream device 114 of the network device 125. In this case, in the advertisement packet generated by the network device 125, the first identifier may include the area identifier area A corresponding to the device 114 and the device identifier router 5 corresponding to the network device 125.

In some possible implementations, in addition to the area identifier corresponding to the source device and/or the access device identifier corresponding to the source device, the first identifier may further include an AS identifier corresponding to the source device, used to identify an AS in which the source device is located. Certainly, because a network device and a source device in a same AS correspond to a same AS identifier, the AS identifier may not be carried in the foregoing advertisement packet for advertisement, but is separately advertised. Alternatively, the AS identifier is not advertised, provided that an edge network device of the AS knows the AS identifier.

FIG. 1 is still used as an example. The second network device is the network device 125, and the source device is the downstream device 114 of the network device 125. In this case, in the advertisement packet generated by the network device 125, the first identifier may further include an AS identifier AS 1 corresponding to the device 114.

S202: The second network device sends the advertisement packet to the first network device.

In this embodiment of this application, the first network device may be any one of the network device 121, the network device 122, the network device 123, the network device 124, and the network device 125 in FIG. 1 that is different from the second network device. After generating the advertisement packet, the second network device may send the advertisement packet including the first identifier to the first network device, so as to advertise the area identifier corresponding to the source device and/or the access device identifier corresponding to the source device to the first network device.

In this embodiment of this application, when the second network device is directly connected to the first network device, the second network device may directly send the advertisement packet to the first network device by using a BGP connection between the second network device and the first network device; or when the second network device is indirectly connected to the first network device, the second network device may forward the advertisement packet to the first network device by via another network device in the AS.

FIG. 1 is still used as an example. It is assumed that the second network device is the network device 125, the source device is the downstream device 114 of the network device 125, and the first network device is the network device 122. In this case, the network device 125 may use the area identifier area A corresponding to the device 114 and/or the access device identifier router 5 corresponding to the network device 114 as the first identifier, include the first identifier in the advertisement packet, and send the advertisement packet to the network device 123, so that the network device 123 forwards the advertisement packet to the network device 122.

In some embodiments, the first network device and the second network device may establish a connection by using respective link-local addresses (Link-local addresses, LLAs). In this case, the first identifier may be carried in a routing prefix in a form of an internet protocol version 6 (Internet Protocol version 6, IPv6) address or an internet protocol version 4 (Internet Protocol version 4, IPv4) address.

When a conventional BGP connection is established between the second network device and the first network device, the first identifier may be carried in the advertisement packet in a form of an IPv6 address or an IPv4 address, to form a special internet protocol version 6 (Internet Protocol version 6, IPv6) or internet protocol version 4 (Internet Protocol version 4, IPv4) address. The IPv6 address is used as an example. To distinguish the special IPv6 address from an ordinary IPv6 address, the special IPv6 address may include indication information, where the indication information indicates that the IPv6 address includes the first identifier. For example, it is assumed that indication information is 09, and the first identifier includes an AS identifier of 00000001 corresponding to the source device, an area identifier of 0018 corresponding to the source device, and an access device identifier of 000000XXX1 corresponding to the source device. In this case, the IPv6 address may be 0900:0000:0100:1800::XXX1. It should be noted that, a value of the indication information may be determined based on network segments planned by operators. For example, China Telecom is identified by 09, and China Mobile is identified by 08. A manner in which the special IPv4 address carries the first identifier is similar to that used the IPv6 address. Details are not described herein again.

In this way, when the first network device receives two advertisement packets, and the two advertisement packets respectively include two different IP addresses, the first network device may correspondingly process the advertisement packets based on indication information of the IP addresses. For example, it is assumed that the first network device receives an advertisement packet A and an advertisement packet B, where the advertisement packet A includes a conventional IP address, and the advertisement packet B includes an IP address that carries the first identifier and the indication information. In this case, the first network device may detect whether the advertisement packet A and the advertisement packet B include the indication information. Because the advertisement packet A does not include the indication information, the first network device may process the advertisement packet A in a conventional processing manner. Because the advertisement packet B includes the indication information, the first network device may process the advertisement packet B according to the entry generation method provided in this embodiment of this application. In this way, the first network device may be compatible with a network with a conventional IP address.

In this embodiment of this application, the advertisement packet may be a BGP update (BGP update) message. The second network device may send the BGP update message to the first network device, so that the first network device generates a forwarding entry.

In some possible implementations, the BGP update message may include a network layer reachability information (Network Layer Reachability Information, NLRI) field. Refer to FIG. 3. FIG. 3 is a schematic diagram of a possible format of the NLRI field. The NLRI field may include a length (length) field and a prefix (prefix) field. In an example, the length field occupies one octet, that is, 8 bits (bits), and a length of the prefix field is variable (variable). The prefix field may include a first identifier, that is, the area identifier corresponding to the source device and/or the access device identifier corresponding to the source device. Optionally, in some embodiments, the prefix field may include a route prefix address, and the route prefix address may include the foregoing special IPv6 address or special IPv4 address, that is, include the foregoing first identifier.

S203: The first network device generates the forwarding entry based on the first identifier.

In this embodiment of this application, the first network device may have at least one network interface. The first network device and another network device may transmit a packet to each other through the network interface. In this embodiment of this application, a network interface through which the first network device receives the advertisement packet may be referred to as a first egress. The first egress may be a physical interface, or the first egress may be a virtual interface corresponding to a virtual private network (Virtual Private Network, VPN) identity (identity, ID) or a tunnel (tunnel) ID.

The first network device may generate the forwarding entry based on the advertisement packet and the first egress through which the advertisement packet is received. The forwarding entry may also be referred to as a routing entry or another name, the forwarding entry may include the first identifier and an identifier of the first egress, and the first identifier in the forwarding entry matches the first identifier carried in the advertisement packet.

After receiving the advertisement packet via the first egress, the first network device may store a correspondence between the first identifier carried in the advertisement packet and the identifier of the first egress, and store the correspondence in the forwarding entry. In this way, after receiving the first packet whose destination address includes the first identifier, the first network device may determine, based on the forwarding entry, the identifier of the first egress corresponding to the first packet, so as to determine the first egress for sending the first packet.

It should be noted that, if the first identifier carried in the advertisement packet is in a form of an IP address, the first identifier in the generated forwarding entry may also be in a form of an IP address. For details of a form of an IP address, refer to the foregoing descriptions. Details are not described herein again.

In this embodiment of this application, the first identifier carried in the advertisement packet may include any one or more of the area identifier corresponding to the source device and the access device identifier corresponding to the source device. Correspondingly, based on a specific situation of the first identifier in the advertisement packet, the first identifier in the forwarding entry may be the area identifier corresponding to the source device, or may be the access device identifier corresponding to the source device, or may be the area identifier corresponding to the source device and the access device identifier corresponding to the source device. Specifically, there are the following several cases:
Case 1: The first identifier carried in the advertisement packet includes the access device identifier corresponding to the source device, and does not include the area identifier corresponding to the source device.

According to the descriptions of the case 2 in step S201, it can be learned that, if the advertisement packet received by the first network device includes the access device identifier corresponding to the source device and does not include the area identifier corresponding to the source device, it indicates that the first network device and the second network device belong to a same area in a same AS, or the AS to which the first network device belongs is not divided into areas. In this case, the first network device may store a correspondence between the identifier of the first egress through which the advertisement packet is received and an access device identifier corresponding to a destination device, to obtain the forwarding entry, where the destination device in the forwarding entry is the source device corresponding to the advertisement packet. In this way, when the first network device receives the first packet, and the destination address of the first packet includes the access device identifier corresponding to the destination device, the first network device may forward, based on the forwarding entry, the first packet to the access device corresponding to the access device identifier, so that the access device forwards the first packet to the destination device of the first packet.

That is, regardless of how many destination devices are connected to the access device, the first network device only needs to generate one forwarding entry, and does not need to generate a corresponding forwarding entry for each destination device as in a conventional technology. Therefore, a quantity of forwarding entries of the first network device is reduced, a requirement on a processing capability of the first network device is reduced, and maintenance pressure of an operator is reduced.

Still refer to FIG. 1. It is assumed that the first network device is a network device 122. The network device 122 has a network interface X and a network interface Y, and the network device 122 is connected to the network device 121 through the network interface X, and is connected to the network device 123 through the network interface Y. In this case, the network device 122 may receive an advertisement packet 1 from the network device 121 through the network interface X, and receive an advertisement packet 2 from the network device 123 through the network interface Y. The advertisement packet 1 includes the identifier router 1 of the network device 121 (that is, an access device of the device 111 and the device 112), and the advertisement packet 2 includes the identifier router 5 of the network device 125 (that is, an access device of the device 114 and the device 115). The network device 122 may generate, based on the advertisement packet 1 and the advertisement packet 2, forwarding entries shown in Table 2. The forwarding entries include a correspondence between an identifier of the network interface X and the access device identifier router 1, and a correspondence between an identifier of the network interface Y and the access device identifier router 5.

**Table 2**

| Access device identifier | Network interface |
|---|---|
| Router 1 | X |
| Router 5 | Y |

Refer to the first row in Table 2. It indicates that when the network device 122 receives a packet, and an access device identifier corresponding to a destination device of the packet is router 1, the network device 122 may send the packet via the interface X. Refer to the second row in Table 2. It indicates that when the network device 122 receives a packet, and an access device identifier corresponding to a destination device of the packet is router 5, the network device 122 may send the packet via the interface Y. Obviously, a quantity of forwarding entries shown in Table 2 is less than a quantity of forwarding entries shown in Table 1.

Case 2: The first identifier carried in the advertisement packet includes the area identifier corresponding to the source device, and does not include the access device identifier corresponding to the source device.

According to the descriptions of the case 1 in step S201, it can be learned that, if the advertisement packet received by the first network device includes the area identifier corresponding to the source device and does not include the access device identifier corresponding to the source device, it indicates that the first network device and the second network device belong to different areas in a same AS. In this case, the first network device may store a correspondence between an area identifier corresponding to a destination device and an identifier of a first egress as a forwarding entry, where the destination device in the forwarding entry is the source device of the advertisement packet. In this way, when the area identifier included in the destination address of the first packet received by the first network device is different from the area identifier corresponding to the first network device, it indicates that the first network device and the destination device of the first packet are in different areas. The first network device may search the forwarding entry based on the area identifier included in the destination address, so as to forward the first packet to a network device in an area corresponding to the destination device.

That is, regardless of a quantity of devices or access devices in the area corresponding to the destination device, the first network device generates only one forwarding entry, that is, a forwarding entry including an area identifier of the area corresponding to the destination device. Therefore, a quantity of forwarding entries of the first network device is reduced compared with that in the conventional technology, a requirement on a processing capability of the first network device is reduced, and maintenance pressure of an operator is reduced.

FIG. 1 is still used as an example. It is assumed that the first network device is the network device 123, and the network device 123 is connected to the network device 122 through a network interface Z. The network device 122 sends an advertisement packet to the network device 123, where the advertisement packet carries an area identifier B. After receiving the advertisement packet, the network device 123 generates a forwarding entry shown in Table 3, where the forwarding entry includes a correspondence between the network interface Z and an area B. That is, the area B includes two access devices, namely, the access device 121 and the access device 122, and three devices, namely, the device 111, the device 112, and the device 113. The network device 123 does not need to separately generate corresponding forwarding entries for the two access devices, and does not need to separately generate corresponding forwarding entries for the three devices. Instead, the network device 123 generates only one forwarding entry corresponding to Table 3, to forward a packet whose destination device is a device in the area B to the area B, reduce a quantity of forwarding entries generated by the network device 123, and reduce a requirement on a processing capability of the network device 123.

**Table 3**

| Area identifier | Network interface |
|---|---|
| Area B | Z |

Case 3: The first identifier carried in the advertisement packet includes the access device identifier corresponding to the source device and the area identifier corresponding to the source device.

According to the descriptions of the case 3 in step S201, it can be learned that, if the advertisement packet received by the first network device includes the area identifier corresponding to the source device and does not include the access device identifier corresponding to the source device, the first network device and the second network device may belong to a same area in a same AS, or may belong to different areas in a same AS. Consequently, in some embodiments, before generating the forwarding entry, the first network device may first determine whether the area identifier corresponding to the source device is the same as the area identifier corresponding to the first network device.

If the area identifier corresponding to the source device is the same as the area identifier corresponding to the first network device, it indicates that the first network device and the source device belong to a same area in a same AS. In this case, the first network device may store a correspondence between the access device identifier corresponding to the source device and the identifier of the first egress as a first forwarding entry. If the area identifier corresponding to the source device is different from the area identifier corresponding to the first network device, it indicates that the first network device and the source device belong to different areas in a same AS. The first network device may store a correspondence between the area identifier corresponding to the source device and the identifier of the first egress as a second forwarding entry. In this way, an amount of information of the forwarding entry is further reduced, and a requirement on a processing capability of the network device is reduced.

FIG. 1 is still used as an example. It is assumed that the first network device is the network device 122. The network device 122 has a network interface X and a network interface Y, and the network device 122 is connected to the network device 121 through the network interface X, and is connected to the network device 123 through the network interface Y. In this case, the network device 122 may receive an advertisement packet from the network device 121 through the network interface X, and receive an advertisement packet from the network device 125 through the network interface Y. If these advertisement packets include the access device identifier corresponding to the source device and the area identifier corresponding to the source device, the network device 122 may generate the first forwarding entry shown in Table 4 and the second forwarding entry shown in Table 5. The first forwarding entry includes a correspondence between an identifier of the network interface X and an access device identifier router 1. The second forwarding entry includes a correspondence between an identifier of the network interface Y and an area A.

**Table 4**

| Access device identifier | Network interface |
|---|---|
| Router 1 | X |

**Table 5**

| Area identifier | Network interface |
|---|---|
| Area A | Y |

Refer to the second row in Table 4. It indicates that when the network device 122 receives a packet that needs to be sent to an area B, and an access device identifier corresponding to a destination device of the packet is router 1, the network device 122 may send the packet via the interface X. Refer to the second row in Table 5. It indicates that when the network device 122 receives a packet that needs to be sent to the area A, the network device 122 may send the packet via the interface Y A quantity of forwarding entries is reduced compared with that of the forwarding entries shown in Table 1, and the requirement on the processing capability of the network device is reduced.

In some other embodiments, the first network device may alternatively directly generate corresponding forwarding entries based on the first identifier carried in the advertisement packet, that is, the area identifier and the access device identifier. In other words, the forwarding entries may include both the area identifier, the access device identifier, and a corresponding network interface for receiving the advertisement packet.

In conclusion, in this embodiment of this application, regardless of content included in the first identifier of the advertisement packet, the quantity of forwarding entries of the first network device can be reduced, so that a requirement on a processing capability of the first network device is reduced, and maintenance pressure of an operator is reduced.

In a conventional technology, to send a packet to a source device, an access device needs to store a correspondence between an IP address of the source device and a network interface. FIG. 1 is still used as an example. The network device 125 has a network interface M and a network interface N, and the network device 125 is connected to the device 114 through the network interface M, and is connected to the device 115 through the network interface N. In addition, an IP address of the device 114 is 192.1.1.4, and an IP address of the device 115 is 192.1.1.5. In this case, forwarding entries generated by the network device 125 may be as shown in Table 6.

**Table 6**

| Destination address | Network interface |
|---|---|
| 192.1.1.4 | M |
| 192.1.1.5 | N |

Because the IP address is long, the forwarding entry occupies a large amount of storage space. Consequently, in this embodiment of this application, the access device of the source device may generate the forwarding entry by using the identifier of the source device. The access device may obtain the identifier of the source device, and store a correspondence between the identifier of the source device and an identifier of a network interface connected to the source device as the forwarding entry. In the forwarding entry, the identifier of the source device is an identifier of a destination device.

A length of the identifier of the destination device is less than a length of an IP address of the destination device. In this way, by replacing the IP address of the destination device with the identifier of the destination device with a shorter length, a size of storage space occupied by each forwarding entry is reduced, so that the requirement on the processing capability of the network device is further reduced, and the maintenance pressure of the operator is reduced. In addition, the destination address in the packet, namely, the IP address of the destination device in the conventional technology, may be replaced with the identifier of the destination device herein. Because a length of the identifier of the destination device is shorter than the length of the IP address, a packet length can be reduced, and packet forwarding efficiency can be improved.

In an example, the identifier of the destination device may be a sequence number of the destination device. The access device may number destination devices based on a sequence of accessing a network by the destination devices, to obtain sequence numbers of the destination devices. For example, a destination device that firstly accesses the network may be numbered 1, and a destination device that secondly accesses the network may be numbered 2.

Still refer to FIG. 1. It is assumed that the access device is the network device 125. The network device 125 has a network interface M and a network interface N, and the network device 125 is connected to the device 114 through the network interface M, and is connected to the device 115 through the network interface N. The identifier of the destination device is number information of the destination device, for example, a sequence number or a classification number, and the device 114 accesses the network earlier than the device 115. In this case, the network device 125 may generate a forwarding entry shown in Table 7. The forwarding entry includes a correspondence between the network interface M and an identifier 1 of the source device, and a correspondence between the network interface N and an identifier 2 of the source device.

**Table 7**

| Identifier of a destination device | Network interface |
|---|---|
| 1 | M |
| 2 | N |

Refer to the first row in Table 7. It indicates that when the network device 125 receives a packet, and an identifier of a destination device of the packet is 1, the network device 125 may send the packet via the interface M. Refer to the second row in Table 7. It indicates that when the network device 125 receives a packet, and an identifier of a destination device of the packet is 2, the network device 125 may send the packet via the interface N.

By step S203, the first network device completes generation of the forwarding entry.

It may be understood that the forwarding entry may be generated not by receiving an advertisement packet, and may be generated in a manner of static configuration or the like. This is not specifically limited in this embodiment of this application.

The foregoing describes the forwarding entry generation method, and the following describes a packet sending method provided in an embodiment of this application.

S204: A first device sends the first packet to the first network device.

In this embodiment of this application, the first device may be a terminal device or a server. The first device may communicate with the first network device. After generating the first packet, the first device may send the first packet to the first network device, so that the first network device forwards the first packet to a destination device of the first packet. In this embodiment of this application, the destination device of the first packet may be a downstream device of the second network device, for example, may be the foregoing source device, and the first device, the first network device, the second network device, and the destination device of the first packet belong to a same autonomous system.

For ease of description, an example in which the destination device of the first packet is the downstream device of the second network device is used below for description.

In this embodiment of this application, the first packet may include a destination address, and the destination address of the first packet may include a first identifier. The first identifier may include any one or more of an area identifier corresponding to the destination device and an access device identifier corresponding to the destination device, and indicates a location of the destination device of the first packet in the AS.

In this embodiment of this application, the area identifier corresponding to the destination device indicates an area in which the destination device is located in the AS, and the access device identifier corresponding to the destination device indicates a location of an access device of the destination device in the AS. If the destination device is the source device of the foregoing advertisement packet, the area identifier corresponding to the destination device is the foregoing area identifier corresponding to the source device, and the access device identifier corresponding to the destination device is the foregoing access device identifier corresponding to the source device.

In this embodiment of this application, the first identifier may further include an AS identifier corresponding to the destination device, indicating a location of an AS corresponding to the destination device in the network.

In this embodiment of this application, before sending the first packet, the first device may first obtain a destination address of the foregoing destination device. In an example, the first device may send a first request to a first server, and determine the destination address by receiving a first response from the first server. The first server may be a domain name system (Domain Name System, DNS) server or another server. The destination address may include the area identifier corresponding to the destination device and/or the access device identifier corresponding to the destination device.

When the first device needs to access the destination device, the first device may send the first request to the first server. In this embodiment of this application, the first device or a gateway device connected to the first device may parse a to-be-accessed network address to obtain a DNS corresponding to the destination device, include the DNS corresponding to the destination device in a first request, and send the first request to the first server.

After receiving the first request sent by the first device, the first server may search, based on the DNS included in the first request, for the destination device corresponding to the DNS, so as to determine the area identifier corresponding to the destination device and/or the access device identifier corresponding to the destination device. The first server may send, to the first device, a first response including the area identifier corresponding to the destination device and/or the access device identifier corresponding to the destination device.

FIG. 1 is still used as an example. It is assumed that the device 111 is a terminal device, the device 114 is a server, and the terminal device 111 expects to access the server 114. In this case, the terminal device 111 may first obtain a DNS of the server 114, and send, to the first server (not shown in the figure), a first request including the DNS of the server 114. The first server may search, based on the DNS of the server 114, for an address corresponding to the server 114. In an example, the address includes an area identifier corresponding to the server 114 and/or an access device identifier corresponding to the server 114. The address corresponding to the server 114 is sent to the terminal device 111 by using the first response. In this way, the terminal device 111 may send the first packet to the server 114 based on the address corresponding to the server 114.

To enable the destination device to know an address of the first device, the first packet may carry address information of the first device. In this case, before sending the first packet, the first device may first obtain the address information of the first device, where the address information may include an area identifier corresponding to the first device and/or an access device identifier corresponding to the first device.

In an example, the first device may send a second request to a second device to obtain the address information of the first device, and the second request may include an identifier of the first device. The identifier of the first device may be an identifier indicating identity information of the first device, such as a device ID of the first device. The second device may be an access device of the first device, or may be a server or the like. The second device receives the second request, obtains, based on the identifier of the first device in the second request, one or more of the area identifier corresponding to the first device and the access device identifier corresponding to the first device, and generates and sends a second response to the first device. The second response includes one or more of the area identifier corresponding to the first device and the access device identifier corresponding to the first device. The area identifier corresponding to the first device indicates an area to which the first device belongs in the AS, that is, an area to which the access device of the first device belongs. The access device identifier corresponding to the first device may be a device identifier of the access device of the first device, and used to identify a location of the access device of the first device in the AS.

When the second device is the access device of the first device, after receiving the second request, the second device may further obtain the address information of the first device from a server that stores a correspondence between the identifier of the first device and the address information of the first device, and generate the second response after obtaining the address information.

After receiving the second response, the first device may generate the first packet including the address information of the first device.

When the second device is the access device of the first device, in another possible implementation, the first packet sent by the first device may not further carry the address information of the first device. After receiving the first packet, the access device of the first device includes the address information of the first device in the first packet, so that the destination device of the first packet can obtain the address information of the first device.

FIG. 1 is still used as an example. It is assumed that the first device is the device 115, and an access device of the first device is the network device 125. The device 115 sends the first packet to the network device 125.

After receiving the first packet, the network device 125 may include, in the first packet, one or more of an area identifier area A corresponding to the device 115 and an access device identifier router 5 corresponding to the device 115, and send the first packet to a next-hop network device.

Correspondingly, the first packet may further include a source address field, and the source address field may include the area identifier corresponding to the first device and/or the access device identifier corresponding to the first device. In this way, after receiving the first packet, the destination device may determine a location of the first device in a network based on a value of the source address field, so as to send a packet to the first device.

In some possible implementations, the first device may first send the first request and then send the second request. Certainly, the first device may alternatively first send the first request and then send the second request. This is not limited in this embodiment of this application.

S205: The first network device determines the first egress based on the first identifier.

After receiving the first packet, the first network device may search the forwarding entry based on the first identifier included in the first packet, to determine the corresponding first egress, so as to send the first packet to the destination device via the first egress.

In this embodiment of this application, the first identifier may include the area identifier corresponding to the destination device and/or the access device identifier corresponding to the destination device. Based on different content carried in the first identifier and different content included in a corresponding forwarding entry, the first network device may determine the first egress based on the forwarding entry in a plurality of implementations. There may be specifically the following three cases:

Case 1: The first identifier of the first packet includes the access device identifier corresponding to the destination device and does not include the area identifier corresponding to the destination device.

Correspondingly, as mentioned above, the forwarding entry of the first network device includes at least the access device identifier corresponding to the destination device, and optionally, may further include the area identifier corresponding to the destination device. In this case, the first network device searches the forwarding entry based on the access device identifier that is in the first packet and that is corresponding to the destination device, to obtain the corresponding first egress.

FIG. 1 is still used as an example. It is assumed that the device 113 is used as the first device to generate the first packet, and sends the first packet to the network device 122 used as the first network device, where the destination device of the first packet is the device 114. An access device corresponding to the device 114 is the network device 125, and an access device identifier corresponding to the device 114 is the device identifier router 5 of the network device 125.

After receiving the first packet, the network device 122 may obtain the first identifier carried in the first packet, and when determining that the first packet includes the access device identifier router 5 corresponding to the device 114, the network device 122 may determine the first egress by using the forwarding entry shown in Table 2. It can be learned from the second row of the forwarding entry shown in Table 2 that the first egress corresponding to the access device identifier router 5 is the network interface Y. In this case, the network device 122 may determine that a first egress for sending the first packet is the network interface Y

Case 2: The first identifier of the first packet includes the area identifier corresponding to the destination device and does not include the access device identifier corresponding to the destination device.

Correspondingly, as mentioned above, the forwarding entry of the first network device includes at least the area identifier corresponding to the destination device, and optionally, may further include the access device identifier corresponding to the destination device. In this case, the first network device searches the forwarding entry based on the area identifier that is in the first packet and that is corresponding to the destination device, to obtain the corresponding first egress.

Optionally, before searching the forwarding entry, the first network device may first determine whether the area identifier that is in the first packet and that is corresponding to the destination device is the same as the area identifier corresponding to the first network device. If the area identifiers are different, it is considered that the first network device and the destination device belong to different areas, and the first network device may search the forwarding entry based on the area identifier corresponding to the destination device.

FIG. 1 is used as an example. It is assumed that the device 114 is used as the first device to generate a first packet, and the network device 125 sends the first packet to the network device 123 used as the first network device, where a destination device of the first packet is the device 113. In this embodiment of this application, the first packet includes an area identifier area B corresponding to the device 113.

After receiving the first packet, the network device 125 may obtain the first identifier carried in the first packet, and when determining that the first identifier includes an area identifier area B corresponding to the device 114, the network device 123 may determine the first egress by using the forwarding entry shown in Table 3. It can be learned from the first row of the forwarding entry shown in Table 3 that a first egress corresponding to the area identifier area B is a network interface Z. In this case, the network device 123 may determine that the first egress for sending the first packet is the network interface Z.

Optionally, the network device 123 may first determine that the area B carried in the first packet is different from the area identifier area A corresponding to the network device 123, that is, when determining that areas corresponding to the network device 123 and the destination device of the first packet are different, the network device 123 may search the forwarding entry.

If the area identifier corresponding to the destination device is consistent with the area identifier of the first network device, it indicates that the destination device and the first network device belong to a same area of a same AS. In this case, the first packet further includes other information that can indicate a location of the destination device of the first packet in a network, and may be a number of the destination device, a MAC address, or the like, so that the first network device may search the forwarding entry based on the location information and perform forwarding.

Case 3: The first identifier of the first packet includes the area identifier corresponding to the destination device and the access device identifier corresponding to the destination device.

In this case, the forwarding entry included in the first network device has three cases: 1. The forwarding entry includes a forwarding entry corresponding to the area identifier corresponding to the destination device but does not include a forwarding entry of the access device identifier corresponding to the destination device. 2. The forwarding entry includes the access device identifier corresponding to the destination device but does not include a forwarding entry of the area identifier corresponding to the destination device. 3. The forwarding entry includes the area identifier corresponding to the destination device and a forwarding entry of the access device corresponding to the destination device. In any case, the forwarding entry may be searched based on content that is included in the forwarding entry.

Case 4: The first identifier of the first packet includes the number of the destination device.

In this case, the first network device may determine the first egress based on a forwarding table type shown in Table 7.

S206: The first network device sends the first packet via the first egress.

After the first egress corresponding to the first packet is determined, the first network device may send the first packet via the first egress, so that the destination device of the first packet can receive the first packet and complete packet transmission.

In this embodiment of this application, to reduce a length of a packet and improve packet transmission efficiency, if a next-hop network device of the first network device does not need to search the forwarding entry based on the first identifier to perform forwarding, the first network device may remove a part of or all information included in the first identifier from the first packet before sending the first packet. The first network device may remove different objects based on different information included in the first identifier. Specifically, the following two cases may be included:

Case 1: The first identifier in the first packet includes the area identifier. In this case, the first identifier may include or not include the access device identifier.

If an area identifier corresponding to the next-hop network device of the first network device is the same as the area identifier corresponding to the destination device, it indicates that the first packet is to enter an area in which the destination device is located, and a network device in the area does not need to perform forwarding based on the area identifier. Therefore, the first network device may remove the area identifier from the first packet, that is, delete the area identifier from the first packet, and send the remaining first packet via the first egress to the network device in the area in which the destination device is located. If the first identifier further includes the access device identifier, the next-hop network device forwards the first packet based on the access device identifier. If the first identifier does not include the access device identifier, the next-hop network device may forward the first packet based on information such as the number of the destination device carried in the first packet.

The following provides further descriptions with reference to FIG. 1. It is assumed that the network device 122 is the first network device, and the device 114 is the destination device of the first packet. In this case, the next-hop device of the network device 122 is the network device 123, and the area identifier that is carried in the first packet and that is corresponding to the destination device is an area A and an access device identifier router 5 corresponding to the destination device.

After receiving the first packet, the network device 122 may compare whether the area identifier area A carried in the first packet is the same as the area identifier of the network device 123. Because the network device 123 also belongs to the area A, the network device 122 may determine that the area identifier of the next-hop network device of the first packet is the same as the area identifier corresponding to the destination device, so as to remove the area identifier area A carried in the first packet, and send, to the network device 123, the first packet from which the area identifier area A is removed. In this case, the network device 123 forwards the first packet based on the access device identifier router 5 in the first packet.

Certainly, the area identifier in the first packet may alternatively be removed from the first packet after the first packet enters the area corresponding to the destination device and reaches any-hop network device before the destination device, so that packet transmission efficiency can also be improved in different degrees.

Case 2: The first identifier in the first packet includes an access device identifier.

If an identifier of the next-hop network device of the first network device is the same as the access device identifier corresponding to the destination device, it indicates that the next-hop network device of the first network device is the access device of the destination device. Because the access device of the destination device does not need to forward the first packet based on the access device identifier in the first packet, to reduce a length of the first packet, before sending the first packet, the first network device may remove the access device identifier from the first packet, that is, delete the access device identifier, and send, to the access device via the first egress, the first packet from which the access device identifier is deleted.

The following provides further descriptions with reference to FIG. 1. It is assumed that the network device 122 is the first network device, the device 111 is the destination device of the first packet, the next-hop device of the network device 122 is the network device 121, and the first packet carries the access device identifier router 1 corresponding to the destination device.

After receiving the first packet, the network device 122 may compare whether the access device identifier carried in the first packet is the same as a device identifier of the network device 121. Because the device identifier of the network device 121 is router 1, which is the same as the access device identifier carried in the first packet, the network device 122 may determine the next-hop network device of the network device 122, that is, the access device of the destination device, remove the access device identifier router 1 carried in the first packet, and send, to the network device 121, the first packet from which the access device identifier router 1 is removed.

In addition, it should be noted that the foregoing examples are all about packet forwarding inside an AS, that is, the source device and the destination device belong to a same AS. In actual application, the method provided in this embodiment of this application may be further used for packet forwarding between ASs, that is, the source device and the destination device are not in a same AS. Details are not described herein again.

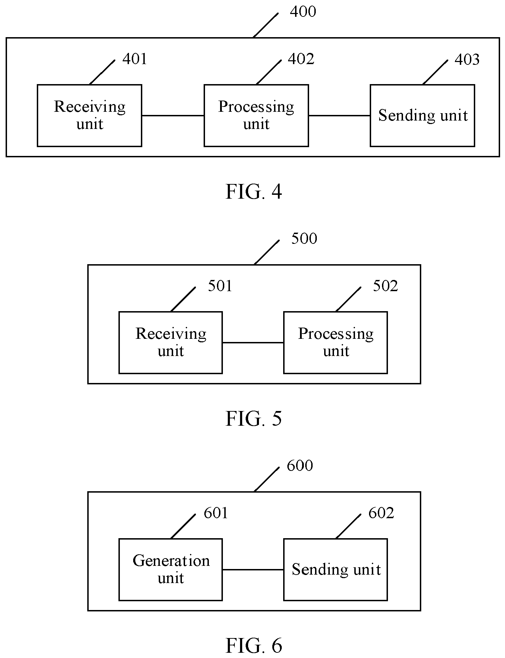

Correspondingly, refer to FIG. 4. An embodiment of this application further provides a packet sending apparatus 400. The apparatus 400 is applied to a network device, and the network device may be used as a first network device to perform related steps of sending a packet in the embodiment shown in FIG. 2. The apparatus 400 includes a receiving unit 401, a processing unit 402, and a sending unit 403. The receiving unit 401 may be configured to receive a first packet, the processing unit 402 may be configured to perform step S205 in the embodiment shown in FIG. 2, and the sending unit 403 may be configured to perform step S206 in the embodiment shown in FIG. 2.

For example, the receiving unit 401 is configured to receive a first packet, where a destination address of the first packet includes a first identifier, the first network device and a destination device of the first packet belong to a same AS, and the first identifier includes one or more of the following: an area identifier corresponding to the destination device and an access device identifier corresponding to the destination device. The processing unit 402 is configured to determine a first egress based on the first identifier. The sending unit 403 is configured to send the first packet via the first egress.

For other content of the packet entry sending apparatus 400, refer to the foregoing descriptions. Details are not described herein again.

Refer to FIG. 5. An embodiment of this application further provides an entry generation apparatus 500. The apparatus 500 is applied to a network device. The network device may be used as a first network device to perform related steps of generating an entry in the embodiment shown in FIG. 2. The apparatus 500 includes a receiving unit 501 and a processing unit 502. The receiving unit 501 may receive an advertisement packet sent by a first network device, and the processing unit 502 may be configured to perform step S203 in the embodiment shown in FIG. 2.

For example, the receiving unit 501 is configured to receive an advertisement packet, where the advertisement packet includes a first identifier corresponding to a source device, the first network device and the source device belong to a same AS, and the first identifier includes one or more of the following: an area identifier corresponding to the source device and an access device identifier corresponding to the source device. The processing unit 503 is configured to generate a forwarding entry based on the first identifier, where the forwarding entry includes the first identifier and an identifier of a first egress, and receive, the advertisement packet via the first egress.

For other content of the entry generation apparatus 500, refer to the foregoing descriptions. Details are not described herein again.

Refer to FIG. 6. An embodiment of this application further provides a packet sending apparatus 600. The apparatus 600 is applied to a network device, and the network device may be used as a second network device to perform related steps in the embodiment shown in FIG. 2. The apparatus 600 includes a generating unit 601 and a sending unit 602. The generating unit 601 may be configured to perform step S201 in the embodiment shown in FIG. 2, and the sending unit 602 may be configured to perform step S202 in the embodiment shown in FIG. 2.

For example, the generating unit 601 is configured to generate an advertisement packet, where the advertisement packet includes a first identifier corresponding to a source device, a first network device and the source device belong to a same AS, and the first identifier includes one or more of the following: an area identifier corresponding to the source device and an access device identifier corresponding to the source device. The sending unit 602 is configured to send the advertisement packet to the first network device.

For other content of the packet sending apparatus 600, refer to the foregoing descriptions. Details are not described herein again.

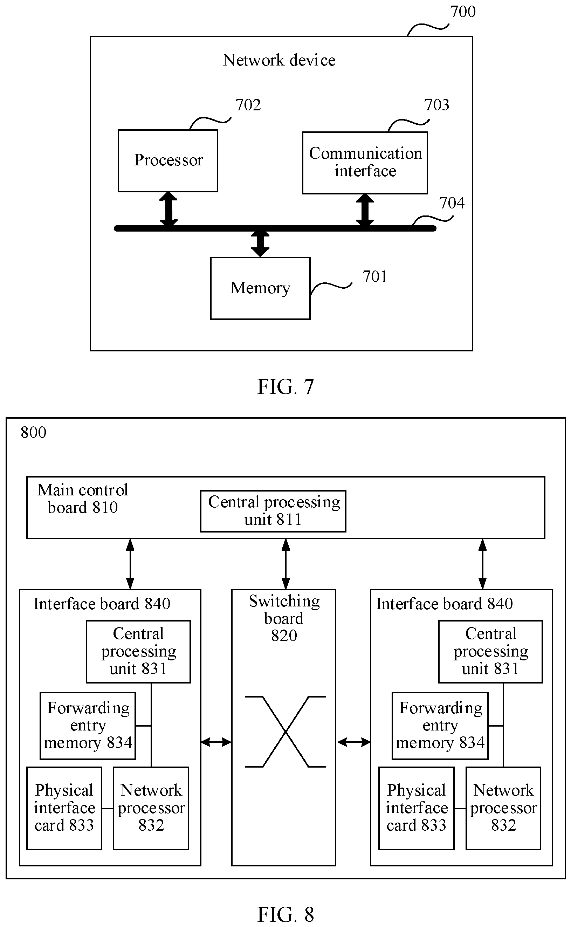

Refer to FIG. 7. An embodiment of this application further provides a network device 700. The network device 700 includes at least one processor 702 and at least one communication interface 703. Further, the network device may further include at least one memory 701, and the memory 701 is configured to store a computer program or instructions. The memory 701 may be a memory inside the processor, or may be a memory outside the processor. A function of the apparatus 400 may be implemented on the network device 700. When the embodiment shown in FIG. 5 is implemented and the units described in the embodiment of FIG. 4 are implemented by using software, software or program code required for performing functions of the receiving unit 401, the processing unit 402, and the sending unit 403 in FIG. 4 is stored in the memory 701. A function of the apparatus 500 may be implemented on the network device 700. When the embodiment shown in FIG. 5 is implemented and the units described in the embodiment of FIG. 5 are implemented by using software, software or program code required for performing functions of the receiving unit 501 and the processing unit 502 in FIG. 5 is stored in the memory 701. The processor 702 is configured to execute the instructions in the memory 701, so that the network device 700 performs any one or more of step S203, step S205, or step S206 in the embodiment shown in FIG. 2. The communication interface 703 is configured to communicate with another network device or a first device.

The memory 701, the processor 702, and the communication interface 703 are connected to each other by using a bus 704. The bus 704 may be a peripheral component interconnect (peripheral component interconnect, PCI for short) bus, an extended industry standard architecture (extended industry standard architecture, EISA for short) bus, or the like. Buses may be classified into an address bus, a data bus, a control bus, or the like. For ease of representation, only one bold line is used for representation in FIG. 7, but this does not mean that there is only one bus or only one type of bus.

In a specific embodiment, the processor 702 may be configured to: receive a first packet, where a destination address of the first packet includes a first identifier, a first network device and a destination device of the first packet belong to a same AS, and the first identifier includes one or more of the following: an area identifier corresponding to the destination device and an access device identifier corresponding to the destination device; and determine a first egress based on the first identifier and send the first packet via the first egress. For a detailed processing process of the processor 702, refer to the detailed descriptions of step S205 and step S206 in the embodiment shown in FIG. 2. Details are not described herein again.

In a specific embodiment, the processor 702 may be further configured to: receive an advertisement packet, where the advertisement packet includes a first identifier corresponding to a source device, a first network device and the source device belong to a same AS, and the first identifier includes one or more of the following: an area identifier corresponding to the source device and an access device identifier corresponding to the source device; and generate a forwarding entry based on the first identifier. The forwarding entry includes the first identifier and an identifier of a first egress. The first network device receives the advertisement packet via the first egress. For a detailed processing process of the processor 702, refer to the detailed descriptions of step S203 in the embodiment shown in FIG. 2. Details are not described herein again.

The communication interface 703 is configured to interact with a first device or another network device. For a specific process, refer to the detailed descriptions of the embodiment shown in FIG. 2. Details are not described herein again.

The memory 701 may be a random access memory (random-access memory, RAM), a flash memory (flash), a read-only memory (read only memory, ROM), an erasable programmable read-only memory (erasable programmable read only memory, EPROM), an electrically erasable programmable read-only memory (electrically erasable programmable read only memory, EEPROM), a register (register), a hard disk, a removable hard disk, a CD-ROM, or any other form of storage medium known to a person skilled in the art.

The processor 702 may be, for example, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The communication interface 703 may be, for example, an interface card, or may be an ethernet (ethernet) interface or an asynchronous transfer mode (asynchronous transfer mode, ATM) interface.

FIG. 8 is a schematic diagram of a structure of a network device 800 according to an embodiment of this application. The network devices shown in the embodiment in FIG. 2 may be implemented by using the device shown in FIG. 8. Refer to the schematic diagram of the structure of the device shown in FIG. 8. The device 800 includes a main control board and one or more interface boards. The main control board and the interface board are communicatively connected. The main control board is also referred to as a main processing unit (main processing unit, MPU) or a route processor card (route processor card). The main control board is responsible for controlling and managing each component in the device 800, including route computation, device management, and function maintenance. The interface board is also referred to as a line processing unit (line processing unit, LPU) or a line card (line card), and is configured to forward data. In some embodiments, the device 800 may also include a switching board. The switching board is communicatively connected to the main control board and the interface board. The switching board is configured to forward data between the interface boards. The switching board may also be referred to as a switch fabric unit (switch fabric unit, SFU). The interface board includes a central processing unit, a memory, a forwarding chip, and a physical interface card (physical interface card, PIC). The central processing unit is communicatively connected to the memory, a network processor, and the physical interface card. The memory is configured to store a forwarding table. The forwarding chip is configured to forward a received packet based on a forwarding table stored in the memory. If a destination address of the packet is an address of the device 800, the packet is sent to a central processing unit (central processing unit, CPU), for example, a central processing unit 831 for processing. If the destination address of the packet is not the address of the device 800, a next hop and an outbound interface that are corresponding to the destination address are found in the forwarding table based on the destination address, and the packet is forwarded to the outbound interface corresponding to the destination address. The forwarding chip may be a network processor (network processor, NP). The PIC, also referred to as a subcard, may be installed on the interface board. The PIC is responsible for converting an optical or electrical signal into a packet, checks validity of the packet, and forwards the packet to the forwarding chip for processing. In some embodiments, the central processing unit may also perform a function of the forwarding chip, for example, implement software forwarding based on a general-purpose CPU, so that the interface board does not need the forwarding chip. A communication connection between the main control board, the interface board, and the switching board may be implemented through a bus. In some embodiments, the forwarding chip may be implemented by using an application-specific integrated circuit (application-specific integrated circuit, ASIC) or a field programmable gate array (field programmable gate array, FPGA).

Logically, the device 800 includes a control plane and a forwarding plane. The control plane includes the main control board and the central processing unit. The forwarding plane includes components for performing forwarding, for example, the memory, the PIC, and the NP. The control plane performs functions such as a function of a router, generating a forwarding table, processing signaling and a protocol packet, or configuring and maintaining a status of a device. The control plane delivers a generated forwarding table to the forwarding plane. On the forwarding plane, the NP searches a table and based on the forwarding table delivered by the control plane to forward a packet received by the PIC of the device 800. The forwarding table delivered by the control plane may be stored in the memory. In some embodiments, the control plane and the forwarding plane may be completely separated, and are not on a same device. The following briefly describes the foregoing process with reference to the embodiment shown in FIG. 2.

As shown in the method described in FIG. 2, the network device may receive an advertisement packet or a first packet by using a physical interface card 833, and send the advertisement packet or the first packet to the CPU 831 for processing. The CPU 831 may generate a forwarding entry based on the advertisement packet, or determine a first egress based on the first identifier included in the first packet, so as to send the first packet to a destination device of the first packet via the first egress.

The network device provided in this embodiment of the present invention may correspond to the first network device in the method embodiment of FIG. 2, and may implement functions of the network device in the method embodiments and/or various steps and methods implemented by the network device. The foregoing is merely a brief example description. For brevity, details are not described herein again.

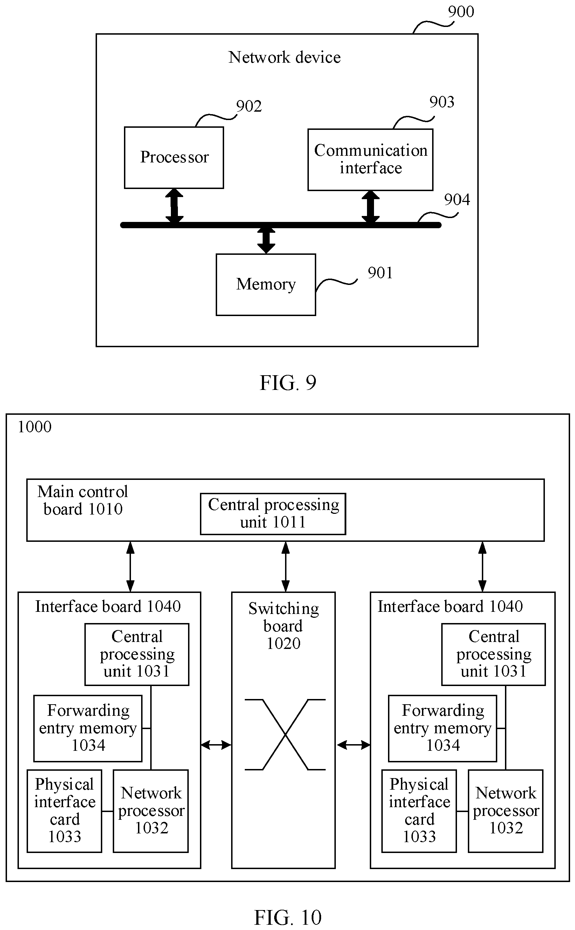

Refer to FIG. 9. An embodiment of this application further provides a network device 900. The network device 900 includes at least one processor 902 and at least one communication interface 903. Further, the network device may further include at least one memory 901, and the memory 901 is configured to store a computer program or instructions. The memory 901 may be a memory inside the processor, or may be a memory outside the processor. When the embodiment shown in FIG. 6 is implemented and the units described in the embodiment of FIG. 6 are implemented by using software, software or program code required for performing functions of the generating unit 601 and the sending unit 602 in FIG. 6 is stored in the memory 901. The processor 902 is configured to execute the instructions in the memory 901, so that the network device 900 performs step S201 and step S202 applied to the embodiment shown in FIG. 2. The communication interface 903 is configured to communicate with another network device.

The memory 901, the processor 902, and the communication interface 903 are mutually connected through a bus 904. The bus 904 may be a peripheral component interconnect (peripheral component interconnect, PCI for short) bus, an extended industry standard architecture (extended industry standard architecture, EISA for short) bus, or the like. Buses may be classified into an address bus, a data bus, a control bus, or the like. For ease of representation, only one bold line is used for representation in FIG. 9, but this does not mean that there is only one bus or only one type of bus.

In a specific embodiment, the processor 902 may be configured to: generate an advertisement packet, and send the advertisement packet to a first network device via a first egress, where the advertisement packet includes a first identifier corresponding to a source device, and the first identifier may include an area identifier corresponding to the source device and/or an access device identifier corresponding to the source device. For a detailed processing process of the processor 902, refer to the detailed descriptions of step S201 and step S202 in the embodiment shown in FIG. 2. Details are not described herein again.

The communication interface 903 is configured to interact with a first network device or another network device. For a specific process, refer to the detailed descriptions of the embodiment shown in FIG. 2. Details are not described herein again.

The memory 901 may be a random access memory (random-access memory, RAM), a flash memory (flash), a read-only memory (read only memory, ROM), an erasable programmable read-only memory (erasable programmable read only memory, EPROM), an electrically erasable programmable read-only memory (electrically erasable programmable read-only memory, EEPROM), a register (register), a hard disk, a removable hard disk, a CD-ROM, or any other form of storage medium known to a person skilled in the art.

The processor 902 may be, for example, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination implementing a computing function, for example, a combination of one or more microprocessors, or a combination of the DSP and a microprocessor.

The communication interface 903 may be, for example, an interface card, or may be an ethernet (ethernet) interface or an asynchronous transfer mode (asynchronous transfer mode, ATM) interface.

FIG. 10 is a schematic diagram of a structure of a network device 1000 according to an embodiment of this application. The second network device shown in the embodiment in FIG. 2 may be implemented by using the device shown in FIG. 10. Refer to the schematic diagram of the structure of the device shown in FIG. 10. The device 1000 includes a main control board and one or more interface boards. The main control board and the interface board are communicatively connected. The main control board is also referred to as a main processing unit (main processing unit, MPU) or a route processor card (route processor card). The main control board is responsible for controlling and managing each component in the device 1000, including route computation, device management, and function maintenance. The interface board is also referred to as a line processing unit (line processing unit, LPU) or a line card (line card), and is configured to forward data. In some embodiments, the device 1000 may also include a switching board. The switching board is communicatively connected to the main control board and the interface board. The switching board is configured to forward data between the interface boards. The switching board may also be referred to as a switch fabric unit (switch fabric unit, SFU). The interface board includes a central processing unit, a memory, a forwarding chip, and a physical interface card (physical interface card, PIC). The central processing unit is communicatively connected to the memory, a network processor, and the physical interface card. The memory is configured to store a forwarding table. The forwarding chip is configured to forward a received packet based on a forwarding table stored in the memory. If a destination address of the packet is an address of the device 1000, the packet is sent to a central processing unit (central processing unit, CPU), for example, a central processing unit 1031 for processing. If the destination address of the packet is not the address of the device 1000, a next hop and an outbound interface that are corresponding to the destination address are found in the forwarding table based on the destination address, and the packet is forwarded to the outbound interface corresponding to the destination address. The forwarding chip may be a network processor (network processor, NP). The PIC, also referred to as a subcard, may be installed on the interface board. The PIC is responsible for converting an optical or electrical signal into a packet, checks validity of the packet, and forwards the packet to the forwarding chip for processing. In some embodiments, the central processing unit may also perform a function of the forwarding chip, for example, implement software forwarding based on a general-purpose CPU, so that the interface board does not need the forwarding chip. A communication connection between the main control board, the interface board, and the switching board may be implemented through a bus. In some embodiments, the forwarding chip may be implemented by using an application-specific integrated circuit (application-specific integrated circuit, ASIC) or a field programmable gate array (field programmable gate array, FPGA).

Logically, the device 1000 includes a control plane and a forwarding plane. The control plane includes the main control board and the central processing unit. The forwarding plane includes components for performing forwarding, for example, the memory, the PIC, and the NP. The control plane performs functions such as a function of a router, generating a forwarding table, processing signaling and a protocol packet, or configuring and maintaining a status of a device. The control plane delivers a generated forwarding table to the forwarding plane. On the forwarding plane, the NP searches a table and based on the forwarding table delivered by the control plane to forward a packet received by the PIC of the device 1000. The forwarding table delivered by the control plane may be stored in the memory. In some embodiments, the control plane and the forwarding plane may be completely separated, and are not on a same device. The following briefly describes the foregoing process with reference to the embodiment shown in FIG. 2.

As shown in the method in FIG. 2, the network device may generate an advertisement packet by using a CPU 1031, where the advertisement packet may include a first identifier corresponding to a source device, and the first identifier may include an area identifier corresponding to the source device and/or an access device identifier corresponding to the source device. The CPU 1031 may send the notification packet to a first network device by using the physical interface card 1033, so that the first network device generates a forwarding entry based on the notification packet.

The network device provided in this embodiment of the present invention may correspond to the second network device in the foregoing method embodiment in FIG. 2, and may implement functions of the network device and/or various steps and methods implemented by the network device in the foregoing method embodiments. The foregoing is merely a brief example description. For brevity, details are not described herein again.

It should be noted that, there may be one or more main control boards. When there are a plurality of main control boards, the main control boards may include an active main control board and a standby main control board. There may be one or more interface boards, and a network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by the switching board, to provide a large-capacity data exchange and processing capability. Therefore, a data access and processing capability of a network device in the distributed architecture is better than that of a device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a weak data exchange and processing capability. A specific architecture that is to be used depends on a specific networking deployment scenario. This is not limited herein.

In addition, an embodiment of this application further provides a computer-readable storage medium, including a computer program. When the computer program is run on a computer, the computer is enabled to perform the entry generation method or the packet sending method applied to the network device 800, or the computer is enabled to perform the packet sending method applied to the network device 1000.

An embodiment of this application further provides a chip system, including a processor, where the processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In this application, "at least one item (piece)" means one or more, and "a plurality of" means two or more. At least one of the following items (pieces) or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In this application, it is considered that "A and/or B" includes only A, only B, and both A and B.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, unit division is merely logical module division, and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be obtained according to actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A packet sending method, applied to an autonomous system AS routing system, wherein the AS routing system comprises a first network device, and the method comprises:
receiving, by the first network device, a first packet, wherein a destination address of the first packet comprises a first identifier, the first network device and a destination device of the first packet belong to a same AS, and the first identifier comprises one or more of the following: an area identifier corresponding to the destination device or an access device identifier corresponding to the destination device;
determining, by the first network device, a first egress based on the first identifier; and
sending, by the first network device, the first packet via the first egress.

2. The method according to claim 1, wherein the determining, by the first network device, a first egress based on the first identifier comprises:
determining, by the first network device, the first egress based on a forwarding entry, wherein the forwarding entry comprises the first identifier and an identifier of the first egress.

3. The method according to claim 1, wherein the first identifier comprises the area identifier or the access device identifier, and the determining, by the first network device, a first egress based on the first identifier comprises:
determining, by the first network device, the first egress based on a forwarding entry, wherein the forwarding entry comprises the access device identifier and an identifier of the first egress.

4. The method according to any one of claims 1 to 3, wherein the first identifier comprises the area identifier, and before the sending, by the first network device, the first packet via the first egress, the method further comprises:
removing, by the first network device, the area identifier from the first packet.

5. The method according to any one of claims 1 to 4, wherein the first identifier comprises the access device identifier, and before the sending, by the first network device, the first packet via the first egress, the method further comprises:
removing, by the first network device, the access device identifier from the first packet.

6. The method according to any one of claims 1 to 5, wherein the method further comprises:
receiving, by the first network device, an advertisement packet, wherein the advertisement packet comprises the first identifier; and
generating, by the first network device, the forwarding entry based on the first identifier and the identifier of the first egress, and receiving, by the first network device, the advertisement packet via the first egress.

7. The method according to claim 6, wherein the advertisement packet comprises a route prefix address, and the route prefix address comprises the first identifier.

8. The method according to claim 6 or 7, wherein the advertisement packet is a border gateway protocol BGP update message.

9. The method according to any one of claims 1 to 8, wherein the first identifier further comprises an autonomous system AS identifier corresponding to the destination device, and the AS identifier corresponding to the destination device is the same as an AS identifier corresponding to the first network device.

10. The method according to any one of claims 1 to 9, wherein the first packet comprises an internet protocol version 6 IPv6 address, the IPv6 address comprises indication information and the first identifier, and the indication information indicates that the IPv6 address further comprises the first identifier.

11. An entry generation method, applied to an autonomous system AS routing system, wherein the AS routing system comprises a first network device, and the method comprises:
receiving, by the first network device, an advertisement packet, wherein the advertisement packet comprises a first identifier corresponding to a source device, the first network device and the source device belong to a same AS, and the first identifier comprises one or more of the following: an area identifier corresponding to the source device and an access device identifier corresponding to the source device; and
generating, by the first network device, a forwarding entry based on the first identifier, wherein the forwarding entry comprises the first identifier and an identifier of a first egress, and receiving, by the first network device, the advertisement packet via the first egress.

12. The method according to claim 11, wherein the advertisement packet comprises a route prefix address, and the route prefix address comprises the first identifier corresponding to the source device.

13. The method according to claim 12, wherein the advertisement packet is a border gateway protocol BGP update message.

14. The method according to any one of claims 11 to 13, wherein the first identifier further comprises:
an autonomous system AS identifier corresponding to the source device.

15. A packet sending method, applied to an autonomous system AS routing system, wherein the AS routing system comprises a first network device and a second network device, and the method comprises:
generating, by the second network device, an advertisement packet, wherein the advertisement packet comprises a first identifier corresponding to a source device, and the first identifier comprises one or more of the following: an area identifier corresponding to the source device and an access device identifier corresponding to the source device; and
sending, by the second network device, the advertisement packet to the first network device, wherein the first network device, the second network device, and the source device belong to a same AS.

16. A first network device, wherein the first network device comprises at least one processor, the at least one processor is coupled to at least one memory, and the at least one processor is configured to execute a computer program or instructions stored in the at least one memory, to enable the first network device to perform the packet sending method according to any one of claims 1 to 10 or the entry generation method according to any one of claims 11 to 14.

17. A second network device, wherein the second network device comprises at least one processor, the at least one processor is coupled to at least one memory, and the at least one processor is configured to execute a computer program or instructions stored in the at least one memory, to enable the second network device to perform the packet sending method according to claim 15.

18. A network system, comprising a first network device, wherein
the first network device is configured to receive a first packet, determine a first egress based on a first identifier, and send the first packet via the first egress, wherein a destination address of the first packet comprises a first identifier, the first network device and a destination device of the first packet belong to a same AS, and the first identifier comprises one or more of the following: an area identifier corresponding to the destination device or an access device identifier corresponding to the destination device.

19. The network system according to claim 18 wherein the first network device is further configured to:
receive an advertisement packet and generate a forwarding entry based on a first identifier, wherein the advertisement packet comprises the first identifier, the first identifier corresponds to a source device, the forwarding entry comprises the first identifier and an identifier of the first egress; and receive, the advertisement packet via the first egress.

20. The network system according to claim 18 or 19, wherein the network system further comprises a second network device, and the second network device is configured to generate the advertisement packet and send the advertisement packet to the first network device.
